# EUROPÄISCHE PATENTANMELDUNG

(11) **EP 4 026 815 A1**
(43) Veröffentlichungstag der Anmeldung: **13.07.2022**
(21) Anmeldenummer: 21214609.6
(22) Anmeldetag: 15.12.2021
(51) Int. Cl.: C04B 26/06, C04B 111/54

(54) **AUSHÄRTBARE GIESSMASSE ZUR HERSTELLUNG VON MAGNETISCHEN KUNSTSTOFFFORMTEILEN**

(30) Priorität: 07.01.2021 DE 102021200091
(71) Anmelder: BLANCO GmbH + Co KG, 75038 Oberderdingen (DE)
(72) Erfinder: Hajek, Andreas, 76356 Weingarten (DE)
(74) Vertreter: Ullrich & Naumann PartG mbB

(57) **Zusammenfassung**

Die Erfindung betrifft eine aushärtbare Gießmasse zur Herstellung von Kunststoffformteilen, umfassend eine Bindemittelkomponentenzusammensetzung und eine Füllstoffkomponentenzusammensetzung, wobei die Füllstoffkomponentenzusammensetzung zumindest ein magnetisches Metalloxid, insbesondere Magnetit, mit einem Anteil zwischen 1 und 100 Gewichtsprozent, bezogen auf die Gesamtmasse der Füllstoffkomponentenzusammensetzung aufweist.

## Beschreibung

Die Erfindung betrifft eine aushärtbare Gießmasse zur Herstellung von Kunststoffformteilen, umfassend eine Bindemittelkomponentenzusammensetzung und eine Füllstoffkomponentenzusammensetzung.

Die Erfindung betrifft weiter eine Verwendung einer aushärtbaren Gießmasse.

Die Erfindung betrifft darüber hinaus ein Kunststoffformteil hergestellt unter Verwendung einer aushärtbaren Gießmasse.

Die Erfindung betrifft weiter ein Festlegungssystem, umfassend ein Kunststoffformteil.

Aushärtbare Gießmassen werden zur Herstellung von Kunststoffformteilen, insbesondere im Sanitär- oder Küchenbereich, wie beispielsweise Küchenspülen, Arbeitsplatten, Badewannen, Waschbecken oder dergleichen, verwendet. Die aushärtbaren Gießmassen umfassen dabei üblicherweise ein Bindemittelmaterial sowie ein Füllstoffmaterial zur Verbesserung der mechanischen Eigenschaften der Kunststoffformteile, wie dies beispielsweise aus der DE 38 32 351 A1, der WO 93/10159 A1 oder der WO 2005/071000 A1 bekannt geworden ist.

Aus der EP 0 096 522 A2 ist eine aushärtbare Gießmasse und ein Kunststoffformteil bekannt geworden. Die aushärtbare Gießmasse weist dabei einen Anteil an Metallpulver, umfassend beispielsweise elementares Eisen, auf, um dem Kunststoffformteil magnetische Eigenschaften zu verleihen. Nachteilig dabei ist, dass die Verarbeitung der Gießmasse auf Grund des Metallpulvers aufwendig und schwierig ist.

Aus der WO 2008/129055 A1 ist ein System mit einer Spüle und eine an der Spüle mittels Magnetkraft lösbar festlegbare Spülbürste gezeigt. In oder auf der Spülenwand ist hierzu ein Magnet angeordnet, der mit einem entsprechenden Magneten in der Spülbürste wechselwirkt und die Spülbürste so an der Spüle festlegt. Nachteilig hierbei ist wiederum, dass die Position des Magneten vorab bestimmt ist. Ein weiterer Nachteil - aufwendige Herstellung - ist insbesondere dann gegeben, wenn der Magnet in der Spülenwand angeordnet werden muss. Hierzu muss dieser während des Herstellens der Spüle in geeigneter Position gehalten werden.

Eine Aufgabe der vorliegenden Erfindung ist es daher, eine aushärtbare Gießmasse sowie daraus hergestellte Kunststoffformteile bereitzustellen, die eine einfachere und kostengünstigere Herstellung und gleichzeitig flexiblere Möglichkeiten der Festlegung hinsichtlich der Position von Zusatzkomponenten bereitstellen.

Eine weitere Aufgabe der vorliegenden Erfindung ist es, eine alternative aushärtbare Gießmasse sowie daraus hergestellte Kunststoffformteile bereitzustellen.

Die vorliegende Erfindung löst die vorstehend genannten Aufgaben bei einer aushärtbaren Gießmasse zur Herstellung von Kunststoffformteilen, umfassend eine Bindemittelkomponentenzusammensetzung und eine Füllstoffkomponentenzusammensetzung,
dadurch, dass
die Füllstoffkomponentenzusammensetzung zumindest ein magnetisches Metalloxid, insbesondere Magnetit, mit einem Anteil zwischen 1 und 100 Gewichtsprozent, bezogen auf die Gesamtmasse der Füllstoffkomponentenzusammensetzung aufweist.

Die vorliegende Erfindung löst die vorstehend genannten Aufgaben ebenfalls durch Verwendung einer aushärtbaren Gießmasse gemäß einem der Ansprüche 1-8 zur Herstellung eines Kunststoffformteils für den Küchen- und/oder Sanitärbereich, insbesondere von Küchenspülen und Arbeitsplatten für Küchen.

Die vorliegende Erfindung löst die Aufgaben ebenfalls durch ein Kunststoffformteil, hergestellt unter Verwendung der aushärtbaren Gießmasse gemäß einem der Ansprüche 1-8, insbesondere mittels eines Gießverfahrens.

Die vorliegende Erfindung löst die Aufgaben ebenfalls durch ein Festlegungssystem, umfassend ein Kunststoffformteil gemäß Anspruch 10 und zumindest ein magnetisches oder magnetisierbares Zubehörelement zur Festlegung an dem Kunststoffformteil mittels Magnetkraft.

Insbesondere explizit ausgenommen ist hierbei ein Gewichtsanteil von 5 %, 10 % und/oder 15 % von Magnetit.

Einer der damit erzielten Vorteile ist, dass damit zum einen die Verarbeitbarkeit der aushärtbaren Gießmasse erleichtert wird: Durch Verwendung von magnetischen Metalloxiden, insbesondere von ferrimagnetischem Magnetit, anstelle von reinen, ferromagnetischen Metallpartikeln, sind die magnetischen Kräfte insgesamt kleiner, was eine einfache Deagglomeration des Magnetits in der aushärtbaren Gießmasse erleichtert. Darüber hinaus konnte bei der Verwendung von magnetischen Metalloxiden, insbesondere von Magnetit in sehr geringer Einsatzkonzentration, überraschenderweise festgestellt werden, dass ausreichende magnetische Kräfte zum lösbaren Festlegen von Zubehörelementen an den mit der aushärtbaren Gießmasse hergestellten Kunststoffformteilen bereitgestellt werden können. Werden der aushärtbaren Gießmasse granulare mineralische Partikel zugesetzt, ist weiterhin sichergestellt, dass mit ihr Kunststoffformteile mit einer strukturierten Oberfläche, beispielsweise einer Granitdekoroberfläche, erhalten werden können.

Der Begriff "Magnetit" ist im weitesten Sinne zu verstehen und bezeichnet insbesondere in der Beschreibung, vorzugsweise in den Ansprüchen nicht nur reine Kristalle aus Fe(II, III)-oxid, sondern auch Mischkristalle, die lediglich einen Anteil Fe(ll, III)-oxid aufweisen, insbesondere Titanomagnetit. Unter dem Begriff "Magnetit" ist ebenfalls auch Maghemit, γ-Fe₂O₃, zu verstehen.

Weitere Merkmale, Vorteile und weitere Ausführungsformen der Erfindung sind im Folgenden beschrieben oder werden dadurch offenbar.

Gemäß einer vorteilhaften Weiterbildung weist das zumindest eine magnetische Metalloxid einen Anteil von zumindest 50 Gewichtsprozent, bezogen auf die Gesamtmasse der Füllstoffkomponentenzusammensetzung auf. Einer der damit möglichen Vorteile ist die Bereitstellung einer hohen magnetischen Kraft, ohne dass die Verarbeitbarkeit der aushärtbaren Gießmasse wesentlich erschwert wird.

Gemäß einer weiteren vorteilhaften Weiterbildung weist das zumindest eine magnetische Metalloxid einen Anteil zwischen 15 und 50 Gewichtsprozent, vorzugsweise zwischen 20 und 40 Gewichtsprozent, insbesondere zwischen 25 und 30 Gewichtsprozent, bezogen auf die Gesamtmasse der Füllstoffkomponentenzusammensetzung auf. Einer der damit möglichen Vorteile ist die Bereitstellung einer ausreichenden magnetischen Kraft bei gleichzeitig einfacher Verarbeitbarkeit der aushärtbaren Gießmasse.

Gemäß einer weiteren vorteilhaften Weiterbildung ist das zumindest eine magnetische Metalloxid in Form von körnigem Magnetit bereitgestellt. Vorteil hiervon ist eine einfache Weiterverarbeitbarkeit des Magnetits.

Gemäß einer weiteren vorteilhaften Weiterbildung weist das körnige Magnetit einen mittleren Durchmesser zwischen 100 und 500 Mikrometern, vorzugsweise zwischen 200 und 400 Mikrometern, vorzugsweise zwischen 250 und 350 Mikrometern auf. Einer der damit möglichen Vorteile ist eine gute Homogenisierung des Magnetits in der aushärtbaren Gießmasse.

Gemäß einer weiteren vorteilhaften Weiterbildung weist die Bindemittelkomponentenzusammensetzung zumindest einen Anteil eines flüssigen monomeren Acrylats auf. Vorteil hiervon ist, dass dieses bei der Herstellung eines Kunststoffformteils unter Härtung zu einem Polyacrylat polymerisierbar ist. Zur Erhöhung der Viskosität der aushärtbaren Gießmasse kann dem monomeren Acrylat ein Anteil einer präpolymerisierten Acrylatkomponente zugegeben werden, beispielsweise kann zu dem Monomer Methylmethacrylat präpolymerisiertes Polymethylmethacrylat PMMA hinzugefügt werden.

Gemäß einer weiteren vorteilhaften Weiterbildung weist die Füllstoffkomponentenzusammensetzung einen Anteil einer Peroxidmischung auf. Vorteil hiervon ist, dass eine einfache Steuerbarkeit der Polymerisation bei der Herstellung des Kunststoffformteils ermöglicht wird.

Gemäß einer weiteren vorteilhaften Weiterbildung weist die aushärtbare Gießmasse eine Farbstoffmaterialzusammensetzung zwischen 0,1 Gewichtsprozent und 20 Gewichtsprozent, insbesondere zwischen 0,5 Gewichtsprozent und 10 Gewichtsprozent, insbesondere zwischen 1 Gewichtsprozent und 5 Gewichtsprozent, auf. Vorteil hiervon ist, dass der Farbeindruck des mittels der aushärtbaren Gießmasse hergestellten Kunststoffformteils auf einfache Weise angepasst werden kann, insbesondere der schwarze Farbeindruck von Magnetit überdeckt beziehungsweise zumindest abgeschwächt werden kann, falls kein schwarzer Farbeindruck des Kunststoffformteils bereitgestellt werden soll.

Gemäß einer weiteren vorteilhaften Weiterbildung des Festlegungssystems weist das Zubehörelement zumindest ein magnetisches Element auf, welches mit dem Zubehörelement, insbesondere mittels einer Klebverbindung, verbunden ist. Einer der damit möglichen Vorteile ist eine einfache, kostengünstige und schnelle Bereitstellung von magnetischen Zubehörelementen, auch wenn diese per se keine magnetischen Eigenschaften aufweisen.

Weitere wichtige Merkmale und Vorteile der Erfindung ergeben sich aus den Unteransprüchen und aus der nachfolgenden Erläuterung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung werden in der nachfolgenden Beschreibung anhand der Zeichnungen näher erläutert.

Dabei zeigt
- Figur 1: die Abzugskraft senkrecht und parallel zu einer Probenplatte eines Kunststoffformteils gemäß einer Ausführungsform der vorliegenden Erfindung; und
- Figur 2: in schematischer Form ein Festlegungssystem gemäß einer Ausführungsform der vorliegenden Erfindung.

Es wurde gefunden, dass bei der erfindungsgemäßen Verwendung von Metalloxiden mit magnetischen Eigenschaften schon in geringen Einsatzkonzentrationen im Bereich von 1,0 Gewichtsprozent, insbesondere mehr als 3,0 Gewichtsprozent, vorzugsweise mehr als 5,0 Gewichtsprozent in der aushärtbaren Gießmasse eine erhebliche magnetische Kraft in Verbindung mit handelsüblichen Magneten bereitgestellt werden kann.

### Vergleichsbeispiel

Es wird eine aushärtbare Gießmasse hergestellt, in dem ein Bindemittelmaterial mit einem Füllstoffmaterial versetzt wird gemäß der EP 1 487 906 A1, die hiermit durch expliziten Verweis einbezogen ist. Das Bindemittelmaterial wird im Wesentlichen erhalten durch Lösen von PMMA in MMA, wobei ein Entformungsmittel und Vernetzermonomere zugesetzt werden. Man erhält so einen Bindemittelsirup.

Das Füllstoffmaterial umfasst granulares Quarzmaterial Granucol ^{®} (Firma Gebrüder Dorfner GmbH & Co., Hirschau) sowie Magnetit (Firma LKAB Minerals GmbH). Es wurden die folgenden Typen von Granucol ^{®} und Magnetit eingesetzt:
Granucol ^{®} weiß 2/9 (mittlere Partikelgröße 330 Mikrometer)
Magnetit (mittlerer Durchmesser 300 Mikrometer)

Werden insbesondere verschiedene Granucol ^{®} -Typen verwendet, die unterschiedlich gefärbt sein können, kann eine besonders ansprechende Granitdekor-Optik erzielt werden.

Das Füllstoffmaterial wird nun dem Bindemittelmaterial zugegeben und mit diesem homogen vermischt. Weiterhin wird der aushärtbaren Gießmasse eine Farbmaterialmischung zugesetzt zur Einstellung der gewünschten Farbe des späteren Kunststoffformteils.

Anschließend erfolgt die thermische Aushärtung der Gießmasse mittels radikalischer Polymerisation.

Zusätzlich kann das Bindemittel auch einen oder mehrere Vernetzer umfassen. Als Vernetzer kommen beispielsweise Stoffe aus der Gruppe der aliphatischen oder aromatischen di-, tri- oder multifunktionellen Arcylate oder Methacrylate und/oder der Epoxy-Acrylate oder Methacrylate und/oder der aliphatischen oder aromatischen di-, tri- oder multifunktionellen Urethan Acrylate oder Methacrylate und/oder di-, tri- oder multifunktionellen Polyester Acylate oder Methacrylate und/oder der di-, tri- oder multifunktionellen Silikon Acrylate oder Methacrylate, Silikon Urethan Acrylate oder Methacrylate und Silikon Polyester Acrylate oder Methacrylate oder Kombinationen hiervon in Frage.

Die Zusammensetzung der aushärtbaren Gießmasse gemäß einem Vergleichsbeispiel ist nochmals in allgemeiner Form in der folgenden Tabelle 1 wiedergegeben, wobei die Gehalte der einzelnen Komponenten in Gewichtsprozent angegeben sind.

**Tabelle 1**

| **Zusammensetzung des Vergleichsbeispiels:** | |
|---|---|
| **Komponente** | **Gewichtsprozent** |
| Bindemittel* (PMMA in MMA) *(PMMA: ca. 19 Gewichtsprozent, MMA: ca. 81 Gewichtsprozent) | 23,07 |
| Trimethylolpropantrimethacrylal | 1,89 |
| Peroxidmischung | 0,60 |
| Heucodur^{®} HD952 | 1,66 |
| Iriodin ^{®} 163 | 0,18 |
| Granucol ^{®} weiß 2/9 | 72,60 |
| **Summe** | 100,00 |

Die aushärtbare Gießmasse wird - wie vorstehend erwähnt - nun in eine Gießform für eine Küchenspüle gegeben und unter Wärmeeinwirkung polymerisiert.

Aus der Küchenspüle wird eine Probenplatte herausgeschnitten und mittels eines vorgegebenen Abzugselements, umfassend einen Permanentmagneten mit einer magnetischen Flussdichte von ca. 350 mT, welcher mit einem Haken versehen ist, die Abzugskraft sowohl senkrecht zur Probenplatte als auch parallel zur Probenplatte gemessen. Zur Messung der Abzugskraft wurde ein Handkraftmessgerät Modell I-FGA 08 der Firma Induk GmbH verwendet.

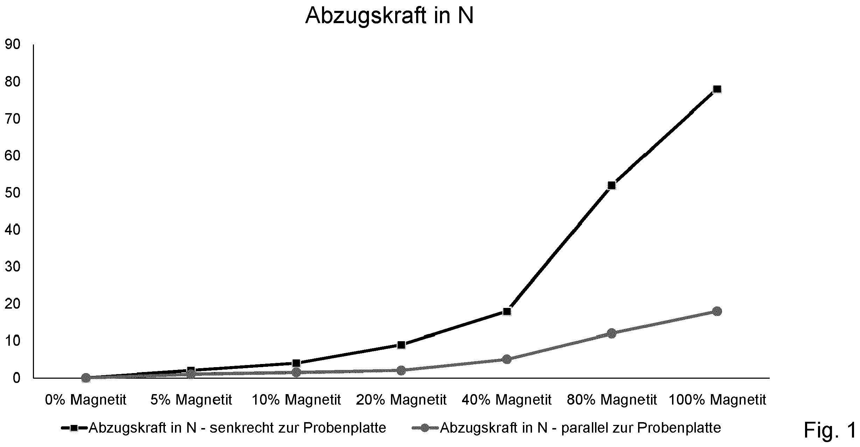

Das so hergestellte Kunststoffformteil gemäß dem Vergleichsbeispiel weist kein Magnetit auf (Figur 1, Magnetit: 0 Gewichtsprozent). Magnetische Eigenschaften konnten nicht ermittelt werden, die jeweiligen Abzugskräfte betragen somit 0 N gemäß Figur 1.

### Beispiele 1-6

Es wird eine erfindungsgemäße Gießmasse hergestellt, die in ihrer Zusammensetzung der aushärtbaren Gießmasse gemäß dem Vergleichsbeispiel größtenteils entspricht, wobei im Wesentlichen eine Menge an Magnetit (Firma LKAB Minerals GmbH) im Austausch gegen eine entsprechende Menge Granucol ^{®} und bei höheren Gehalten an Magnetit zusätzlich auch im Austausch gegen Mengen weiterer Komponenten zugesetzt wird.

Die Zusammensetzung der aushärtbaren Gießmasse gemäß den Beispielen 1-6 ist in der folgenden Tabelle 2 wiedergegeben, wobei die Gehalte der einzelnen Komponenten in Gewichtsprozent angegeben sind, jeweils bezogen auf 100 kg aushärtbare Gießmasse.

**Tabelle 2**

| **Zusammensetzung der mit Magnetit modifizierten Gießmasse:** | | | | | | |
|---|---|---|---|---|---|---|
| **Komponente** | **Magnetit Füllstoffanteil in Gewichtspozent** | | | | | |
| | **5** | **10** | **20** | **40** | **80** | **100** |
| | **Bsp. 1** | **Bsp. 2** | **Bsp. 3** | **Bsp. 4** | **Bsp. 5** | **Bsp. 6** |
| Bindemittel* (PMMA in MMA) *(PMMA: ca. 19 Gewichtsprozent, MMA: ca. 81 Gewichtsprozent) | 23,64 | 22,20 | 21,18 | 18,40 | 17,40 | 13,27 |
| Trimethylolpropantrimethacrylal | 1,91 | 1,92 | 1,91 | 1,89 | 1,89 | 1,24 |
| Peroxidmischung | 0,60 | 0,56 | 0,56 | 0,49 | 0,47 | 0,35 |
| Heucodur^{®} HD952 | 1,66 | 1,69 | 1,72 | 1,78 | 1,80 | 1,13 |
| Iriodin ^{®} 163 | 0,18 | 0,19 | 0,19 | 0,20 | 0,20 | 0,13 |
| Granucol ^{®} weiß 2/9 | 68,37 | 66,00 | 59,44 | 46,14 | 15,34 | 0,00 |
| Magnetit (d50, ca. 300 µm) | 3,64 | 7,44 | 15,00 | 31,10 | 62,90 | 83,88 |
| **Summe** | **100,00** | **100,00** | **100,00** | **100,00** | **100,00** | **100,00** |

Wie für die aushärtbare Gießmasse gemäß dem Vergleichsbeispiel beschrieben, wird mit der aushärtbaren Gießmasse gemäß den Beispielen 1-6 jeweils eine Küchenspüle hergestellt.

Aus der Küchenspüle wird wieder eine Probenplatte herausgeschnitten und mittels eines vorgegebenen Abzugselements, umfassend einen Permanentmagneten mit einer magnetischen Flussdichte von ca. 350 mT, welcher mit einem Haken versehen ist, die Abzugskraft sowohl senkrecht zur Probenplatte als auch parallel zur Probenplatte gemessen. Zur Messung der Abzugskraft wurde ein Handkraftmessgerät Modell I-FGA 08 der Firma Induk GmbH verwendet.

Die so hergestellten Kunststoffformteile gemäß den Beispielen 1-6 weisen einen steigenden Magnetit-Gehalt mit steigender Nummerierung der Beispiele auf. Die jeweiligen Abzugskräfte sind in Figur 1 dargestellt und zeigen einen Anstieg der jeweiligen Abzugskräfte mit steigendem Magnetit-Gehalt, insbesondere zeigen diese einen im Wesentlichen linearen Anstieg der Abzugskräfte senkrecht zur Probenplatte in Bezug auf einen entsprechenden Anstieg des Magnetit-Gehalts.

Als Ergebnis bleibt festzuhalten, dass bereits mit einem geringen Anteil von Magnetit relevante Abzugskräfte bereitgestellt werden können, sodass entsprechende "Gegenelemente" beziehungsweise Zubehörelemente, die mittels Magnetkraft an der Spüle gehalten werden sollen, dort lösbar positionierbar sind verglichen mit dem Versuchsbeispiel.

Die Ergebnisse zeigen somit, dass der Zusatz von magnetischen Metalloxiden, insbesondere von Magnetit, zu der aushärtbaren Gießmasse, insbesondere im Austausch zum/zu Farbstoff(en), zu einer Bereitstellung einer magnetischen aushärtbaren Gießmasse und damit zu einem magnetischen beziehungsweise magnetisierbaren Kunststoffformteil führt.

Die mit der aushärtbaren Gießmasse gemäß einer Ausführungsform der vorliegenden Erfindung hergestellten Kunststoffformteile, wie Küchenspülen oder dergleichen, weisen im Vergleich zu der im Vergleichsbeispiel erhaltenen aushärtbaren Gießmasse magnetische Eigenschaften auf, die zur sicheren und lösbaren Festlegung von entsprechenden Komponenten mittels Magnetkraft ausreichen.

Der Effekt der Bereitstellung von magnetischen Eigenschaften tritt somit bei dem erfindungsgemäßen Einsatz von magnetischen Metalloxiden, insbesondere Magnetit, auf.

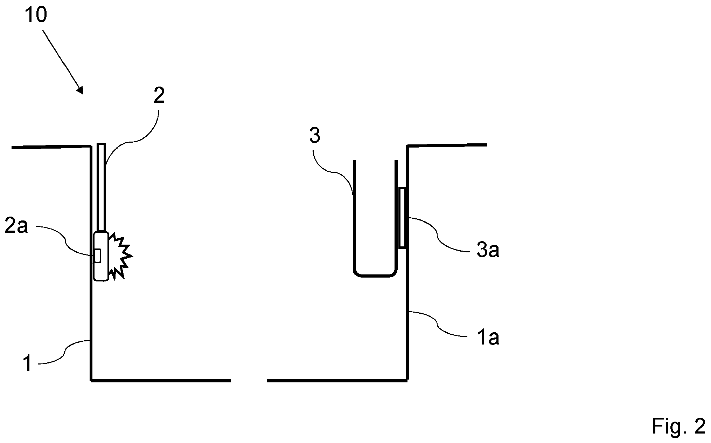

Figur 2 zeigt in schematischer Form ein Festlegungssystem gemäß einer Ausführungsform der vorliegenden Erfindung.

In Figur 2 ist im Querschnitt ein Spülbecken 1 dargestellt, welches magnetische Eigenschaften gemäß Ausführungsformen der Erfindung aufweist. Ein Zubehörelement in Form einer Spülbürste 2, die einen Permanentmagneten 2a in ihrem Kopf aufweist, kann mittels Magnetkraft an eine Seitenwand 1a der Spüle 1 festgelegt werden. Ein weiteres Zubehörelement in Form eines Körbchens 3, beispielsweise zur Aufbewahrung einer Spülmittelflasche oder dergleichen, ist aus Plastik hergestellt. Mittels eines Magnetklebestreifens 3a, der an der Rückseite des Körbchens 3 aufgeklebt wird, kann das Körbchen 3 dann an der Seitenwand 1a der Spüle 1 festgelegt werden.

Zusammenfassend weist zumindest eine der Ausführungsformen der Erfindung zumindest einen der folgenden Vorteile auf:
- Verbesserte Flexibilität bei der Festlegung von Zusatzkomponenten an Kunststoffformteilen.
- Geringe Einsatzmenge des benötigten Wirkungsadditivs (Metalloxid, insbesondere Magnetit) und damit geringe Materialeinsatzkosten.
- Hohe Flexibilität hinsichtlich der optischen Gestaltung von Oberflächen.
- Einfache, kostengünstige Herstellung.
- Einfache Verarbeitbarkeit.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Spülbecken
- 1a: Seitenwand
- 2: Spülbürste
- 2a: Permanentmagnet
- 3: Körbchen
- 3a: Magnetklebestreifen
- 10: Spülensystem

## Patentansprüche

1. Aushärtbare Gießmasse zur Herstellung von Kunststoffformteilen, umfassend eine Bindemittelkomponentenzusammensetzung und eine Füllstoffkomponentenzusammensetzung,
**dadurch gekennzeichnet, dass**
die Füllstoffkomponentenzusammensetzung zumindest ein magnetisches Metalloxid, insbesondere Magnetit, mit einem Anteil zwischen 1 und 100 Gewichtsprozent, bezogen auf die Gesamtmasse der Füllstoffkomponentenzusammensetzung aufweist.

2. Aushärtbare Gießmasse gemäß Anspruch 1, **dadurch gekennzeichnet, dass** das zumindest eine magnetische Metalloxid einen Anteil von zumindest 50 Gewichtsprozent, bezogen auf die Gesamtmasse der Füllstoffkomponentenzusammensetzung aufweist.

3. Aushärtbare Gießmasse gemäß Anspruch 1, **dadurch gekennzeichnet, dass** das zumindest eine magnetische Metalloxid einen Anteil zwischen 15 und 50 Gewichtsprozent, vorzugsweise zwischen 20 und 40 Gewichtsprozent, insbesondere zwischen 25 und 30 Gewichtsprozent, bezogen auf die Gesamtmasse der Füllstoffkomponentenzusammensetzung aufweist.

4. Aushärtbare Gießmasse gemäß einem der Ansprüche 1-3, **dadurch gekennzeichnet, dass** das zumindest eine magnetische Metalloxid in Form von körnigem Magnetit bereitgestellt ist.

5. Aushärtbare Gießmasse gemäß Anspruch 4, **dadurch gekennzeichnet, dass** das körnige Magnetit einen mittleren Durchmesser zwischen 100 und 500 Mikrometern, vorzugsweise zwischen 200 und 400 Mikrometern, vorzugsweise zwischen 250 und 350 Mikrometern aufweist.

6. Aushärtbare Gießmasse gemäß einem der Ansprüche 1-5, **dadurch gekennzeichnet, dass** die Bindemittelkomponentenzusammensetzung zumindest einen Anteil eines flüssigen monomeren Acrylats aufweist.

7. Aushärtbare Gießmasse gemäß einem der Ansprüche 1-6, **dadurch gekennzeichnet, dass** die Füllstoffkomponentenzusammensetzung einen Anteil einer Peroxidmischung aufweist.

8. Aushärtbare Gießmasse gemäß einem der Ansprüche 1-7, **dadurch gekennzeichnet, dass** die aushärtbare Gießmasse eine Farbstoffmaterialzusammensetzung zwischen 0,1 Gewichtsprozent und 20 Gewichtsprozent, insbesondere zwischen 0,5 Gewichtsprozent und 10 Gewichtsprozent, insbesondere zwischen 1 Gewichtsprozent und 5 Gewichtsprozent, aufweist.

9. Verwendung einer aushärtbaren Gießmasse gemäß einem der Ansprüche 1-8 zur Herstellung eines Kunststoffformteils für den Küchen- und/oder Sanitärbereich, insbesondere von Küchenspülen und Arbeitsplatten für Küchen.

10. Kunststoffformteil, hergestellt unter Verwendung der aushärtbaren Gießmasse gemäß einem der Ansprüche 1-8, insbesondere mittels eines Gießverfahrens.

11. Festlegungssystem (10), umfassend ein Kunststoffformteil (1) gemäß Anspruch 10 und zumindest ein magnetisches oder magnetisierbares Zubehörelement (2, 3) zur Festlegung an dem Kunststoffformteil (1) mittels Magnetkraft.

12. Festlegungssystem gemäß Anspruch 11, **dadurch gekennzeichnet, dass** das Zubehörelement (2, 3) zumindest ein magnetisches Element (2a, 3a) aufweist, welches mit dem Zubehörelement, insbesondere mittels einer Klebverbindung, verbunden ist.
